# EUROPÄISCHE PATENTSCHRIFT

(11) **EP 1 350 601 B1**
(45) Veröffentlichungstag und Bekanntmachung des Hinweises auf die Patenterteilung: **08.09.2004**
(21) Anmeldenummer: 03006320.0
(22) Anmeldetag: 20.03.2003
(51) Int. Cl.: B24B 31/00, B23F 19/00

(54) **Verfahren zur Behandlung von Verzahnungen**
Method for treating gears
Procédé de traitement des engrenages

(30) Priorität: 02.04.2002 DE 10214623
(43) Veröffentlichungstag der Anmeldung: 08.10.2003
(73) Patentinhaber: Winergy AG, 46562 Voerde (DE)
(72) Erfinder: Dinter, Ralf Dr., 45888 Gelsenkirchen (DE); Hulshof, Frans, 7102 KW-Winterswijk (NL)
(74) Vertreter: Radünz, Ingo, Dipl.-Ing.

(56) Entgegenhaltungen:
- EP-A- 0 985 739
- DE-C- 3 713 920
- US-A- 3 071 456
- US-A- 4 818 333
- US-A- 5 158 629
- PATENT ABSTRACTS OF JAPAN vol. 014, no. 019 (M-919), 16. Januar 1990 (1990-01-16) -& JP 01 261561 A (TOSHIBA CORP), 18. Oktober 1989 (1989-10-18)

## Beschreibung

Die Erfindung betrifft ein Verfahren zur Behandlung von Innenverzahnungen von Hohlrädern aus Nitrierstahl oder Vergütungsstahl, insbesondere für Getriebe von Windkraftanlagen mit den Merkmalen des Oberbegriffes des Patentanspruches (JP 01 261561 A).

Um die Tragfähigkeit von Innenverzahnungen gegenüber naturharten Verzahnungen zu erhöhen und gleichzeitig den Verschleiß an den Zahnflanken in Folge der Gleitvorgänge unter Last zwischen den Zähnen der Innenverzahnung und denen der Außenverzahnung der Gegenräder zu reduzieren, werden auch die Innenverzahnungen gehärtet. Dieses Härten der Zahnflanken der Innenverzahnungen erfolgt bei geschlossenen Getrieben meistens mittels Gasnitrieren oder durch eine Einsatzhärtung. Im Anschluss an die Einsatzhärtung werden die Zahnflanken geschliffen. Die Gasnitrierung erfolgt durch eine Wärmebehandlung des Werkstückes in einer Stickstoff abgebenden Gasatmosphäre bei Temperaturen um 500 °C. Beim Gasnitrieren entsteht auf der Oberfläche der Zahnflanken eine Härteschicht, die aus einer unten liegenden Diffusionsschicht, einer darüber liegenden, auch weiße Schicht genannten Verbindungsschicht und einer oberen Deckschicht, dem sogenannten Porensaum besteht.

Beide Härteprozesse haben ihre Nachteile. Beim Einsatzhärten der relativ dünnen und großen Hohlräder besteht die Gefahr, dass die hohen Abschrecktemperaturen, die prozessbedingt für die beabsichtigte Gefügeumwandlung notwendig sind, zu großen Verzügen der Zahnflanken führen. Demzufolge dauert das anschließende Zahnflankenschleifen sehr lange und ist kostspielig.

Bei den gasnitrierten Zahnflanken sind durch die im Vergleich zum Einsatzhärten niedrigeren Prozesstemperaturen diese Verzüge der Zahnflanken extrem gering, weshalb auf eine weitere Bearbeitung der Zahnflanken verzichtet werden kann. Nachteilig beim Gasnitrieren ist jedoch die Entstehung der oberen Deckschicht, des sogenannten Porensaumes. Dieser Porensaum ist sehr hart (größer 750 HV_{0,5}) und spröde. Er ist je nach Nitrierdauer einige Mikrometer (ca. 2 bis 5 µm) dick und beträgt ca. 20 bis 25% der Verbindungsschicht. Bei nicht nachbehandelten Zahnflanken wird dieser Porensaum während des Betriebes des Getriebes durch die Gleitvorgänge an den Zahnflanken unter Last abgetragen und gerät in den Schmierstoff. Die abgetragenen, sehr harten Teilchen des Porensaumes können sich negativ auf andere Bauteile im Getriebe auswirken und sind deshalb unerwünscht.

Durch ein mechanisches Zahnflankenschleifen nach dem Gasnitrieren könnte der Porensaum vor dem Einbau der Hohlräder entfernt werden (vgl. JP 01 261561 A). Ein solches mechanisches Zahnflankenschleifen mit rotierenden Schleifscheiben entfernt jedoch immer eine vergleichsweise dicke Oberflächenschicht, so dass eine deutliche Reduzierung der Oberflächenhärte die Folge ist. Um daher nach der Endbearbeitung noch ausreichende Härtetiefen zu haben, sind jedoch eine sehr hohe Nitriertiefe und damit lange Nitrierzeiten von mindestens 84 h erforderlich. Diese langen Nitrierzeiten und das zusätzliche Zahnschleifen sind aufwendig und wirken sich kostenerhöhend aus.

Aus der US-PS 48 18 333 und der US-PS 51 58 629 ist ein Verfahren für ein chemisch beschleunigtes Gleitschleifen bekannt. Bei diesem Verfahren werden die Werkstücke in einer in Vibration versetzten Trommel mit einer wässrigen, säurehaltigen Spezialflüssigkeit und einer Mischung von Feststoffen, worunter leicht abrasiv wirkende, keramische Stoffen sind, behandelt.

Diese Spezialflüssigkeit mit Zusatzstoffen erzeugt auf der rauhen Oberfläche der Werkstücke einen stabilen Umwandlungsüberzug. Der Umwandlungsüberzug wird durch die Vibrationsbewegung immer wieder weggeschwemmt und neu aufgebaut, wodurch die rauhe Oberfläche nivelliert und sehr glatt geschliffen wird.

Bei Getrieben, die einerseits sehr kostengünstig sein sollen, will man andererseits eine sehr lange Standzeit der Wälzlager und der Verzahnung erreichen.

Der Erfindung liegt die Aufgabe zugrunde, die Innenverzahnungen von Hohlrädern so kostengünstig zu härten, dass nach dem Härten weder ein unerwünscht großer Verzug entsteht noch ein Porensaum auf der Innenverzahnung verbleibt.

Die Aufgabe wird bei einem gattungsgemäßen Verfahren erfindungsgemäß durch die kennzeichnenden Merkmale des Patentanspruches gelöst.

Durch die Anwendung der Gasnitrierung ist ein Verzug der Bauteile nach dem Härten sehr gering. Das sich an die Gasnitrierung anschließende Verfahren des Gleitschleifen lässt sich so einstellen, dass nur eine sehr dünne Oberflächenschicht, die gerade den Porensaum mit einem geringen Teil der Verbindungsschicht umfasst, abgetragen wird. Dieser geringe Abtrag von 2 bis 5 µm erlaubt eine geringe Härtetiefe, die mit einer entsprechend kurzen Nitrierdauer zu erreichen ist. So genügen Nitrierzeiten von etwa 36 h, um eine ausreichende Härtetiefe aufzubauen, die eine Nachbehandlung durch das chemisch beschleunigte Gleitschleifen noch ermöglicht.

Das angewendete Verfahren des chemisch beschleunigten Gleitschleifens ist an sich bekannt. Es wurde bisher eingesetzt zur Erzielung von extrem guten Oberflächenqualitäten bei chirurgischen Instrumenten, bei Turbinenschaufeln von Turbinen in Kraftwerken und in Triebwerken von Flugzeugen, bei Teilen für Textilmaschinen und bei Teilen in Rennwagen. Im Rahmen der Erfindung wird dieses Verfahren auf die Gasnitrierung der Innenverzahnung von Hohlrädern abgestimmt, wobei die Vorteile aus beiden Verfahren dadurch genutzt werden, dass trotz einer kürzeren Behandlungsdauer die Qualitätseigenschaften sowohl nach dem Verfahren der Gasnitrierung als auch nach dem Verfahren des Schleifens gesteigert werden.

Im Folgenden wird die Erfindung an einem Ausführungsbeispiel und der Zeichnung erläutert. Es zeigen:

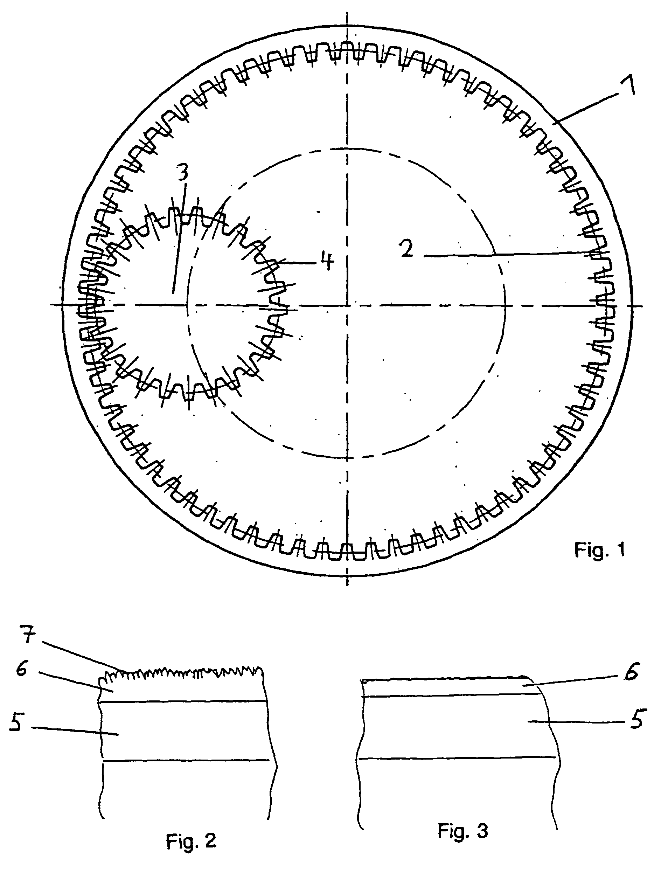

- Fig. 1: einen Querschnitt durch ein Hohlrad eines Getriebes,
- Fig. 2: den Längsschnitt durch die Verzahnung des Hohlrades vor der Endbehandlung und
- Fig. 3: den Längsschnitt durch die Verzahnung des Hohlrades nach der Endbehandlung.

Ein Hohlrad 1 eines Getriebes, z. B. eines Planetengetriebes ist mit einer Innenverzahnung 2 versehen. Mit dem Hohlrad 1 steht ein Gegenrad 3, z. B. ein Planetenrad, in Eingriff, das mit einer Außenverzahnung 4 versehen ist.

Auf der Innenverzahnung 2 des Hohlrades 1 wird durch eine Gasnitrierung eine Härteschicht aufgebracht. Die Gasnitrierung erfolgt dadurch, dass das Hohlrad 1 bei einer Nitriertemperatur von etwa 500 °C einer Stickstoff abgebenden Gasatmosphäre ausgesetzt wird. Die Dauer der Behandlung beträgt etwa 36 h. Durch die Gasnitrierung entsteht eine Härteschicht, die aus einer unten liegenden Diffusionsschicht 5, einer darüber liegenden Verbindungsschicht 6 und einer oberen Deckschicht, dem Porensaum 7, besteht.

Der Porensaum 7 wird durch das Verfahren des chemisch beschleunigten Gleitschleifens abgetragen. Zu diesem Zweck wird das Hohlrad 1 in ein Vibrationsaggregat eingesetzt, das mit einer wässrigen, säurehaltigen Spezialflüssigkeit und einer Mischung aus leicht abrasiv und nicht abrasiv wirkenden, keramischen Stoffen gefüllt ist. Das Vibrationsaggregat wird in Vibration versetzt, wodurch nach dem in der US-PS 48 18 333 und der US-PS 51 58 629 beschriebenen Verfahren die rauhe Oberfläche der Innenverzahnung nivelliert und damit der Porensaum entfernt wird.

Die Behandlungsdauer des chemisch beschleunigten Gleitschleifens beträgt vorteilhafterweise etwa 3 Stunden. Dabei werden prozessmittelabhängig nur wenige Mikrometer der nitrierten Oberfläche abgetragen. Damit ist sichergestellt, dass der Porensaum 7 vollständig und bevorzugterweise nur wenige Mikrometer von der Verbindungsschicht 6 entfernt werden.

Durch das Gleitschleifen entsteht als besondere Qualitätseigenschaft zu dem Entfernen des Porensaumes eine sehr glatte Oberfläche der Zahnflanken, ohne dass das Zahnprofil in der Mikrogeometrie nennenswert verändert wird. Die erzielte Oberflächengüte der Zahnflanken ist mit Ra = ca. 0,3 µm in Abhängigkeit der vorausgegangenen Oberfläche vor dem Nitrieren bedeutend besser als bei Oberflächen, die normalerweise mittels Zahnflankenschleifmaschinen mit rotierenden Schleifscheiben hergestellt werden (Ra = 0,6 bis 0,8 µm). Durch die bessere Oberflächengüte an den Zahnflanken und im Zahngrund werden gleichzeitig die Zahnflanken- und Zahnfußtragfähigkeit erhöht und der Verschleiß reduziert.

## Patentansprüche

1. Verfahren zur Behandlung von Innenverzahnungen von Hohlrädern aus Nitrierstahl oder Vergütungsstahl, insbesondere für Getriebe von Windkraftanlagen, bei dem die geschaffenen oder fertiggestoßenen Zahnflanken der Innenverzahnung der Hohlräder in einer Stickstoff abgebenden Gasatmosphäre gasnitriert werden, **dadurch gekennzeichnet, dass** nach dem Gasnitrieren der gebildete Porensaum durch chemisch beschleunigtes Gleitschleifen in einem in Vibration versetzten Vibrationsaggregat mit Hilfe einer wässrigen, säurehaltigen Spezialflüssigkeit mit einer Mischung von Feststoffen, worunter leicht abrasiv wirkende, keramische Stoffe sind, von der Zahnflankenoberfläche entfernt und dass gleichzeitig gezielt die Zahnflankenoberfläche sehr glatt geschliffen wird.

## Claims

1. Method of treating of internal teeth of annular gears made of nitriding or heat-treatable steel especially for gears of wind power stations whereby the manufactured or finally shaped teeth flanks of internal teeth of the annular gears are nitrogen hardened in a nitrogen releasing gas atmosphere, **characterized in that** the border of pores formed after nitrogen hardening is removed from the surface of the teeth flanks through chemically accelerated vibratory finishing in a vibratory machine by means of an aqueous, acid liquor containing poorly abrasively acting ceramic solids and **in that** the surface of the teeth flanks are ground very smooth at the same time.

## Revendications

1. Procédé de traitement de la denture intérieure de roues à denture intérieure en acier nitruré ou en acier trempé, en particulier pour rouages d'éolienne, dans lequel les flancs de la denture intérieure des roues, bruts ou ayant subi un finissage, sont nitrurés en phase gazeuse dans une atmosphère gazeuse libérant de l'azote, **caractérisé en ce que**, après la nitruration par le gaz, la lisière poreuse formée est éliminée de la surface des flancs des dents par ponçage chimiquement accéléré, dans un appareil vibrant mis en vibration, à l'aide d'un liquide spécial aqueux, contenant un acide, avec un mélange de matières solides, parmi lesquelles des matières céramiques faiblement abrasives, et **en ce que** la surface des flancs des dents est simultanément polie de manière très lisse.
